# EUROPEAN PATENT APPLICATION

(11) **EP 3 260 705 A1**
(43) Date of publication of application: **27.12.2017**
(21) Application number: 16752103.8
(22) Date of filing: 10.02.2016
(51) Int. Cl.: F15B 15/14, B23K 26/21, B66C 23/42, F16J 10/00

(54) **CYLINDER, CYLINDER DEVICE, AND WORKING VEHICLE**

(30) Priority: 16.02.2015 JP 2015027679
(71) Applicant: Tadano Ltd., Takamatsu, Kagawa 761-0185 (JP)
(72) Inventor: YAMAMOTO, Koji, Takamatsu-shi Kagawa 761-0185 (JP); MIZOBUCHI, Hiroki, Takamatsu-shi Kagawa 761-0185 (JP)
(74) Representative: MFG Patentanwälte Meyer-Wildhagen Meggle-Freund Gerhard PartG mbB
(86) International application number: PCT/JP2016/000697
(87) International publication number: WO 2016/132713

(57) **Abstract**

Provided is a hydraulic cylinder using oil pressure, etc., the hydraulic cylinder being configured so that the thickness of a head cover, etc. is reduced so that the hydraulic cylinder is lighter and has a small overall length. A head cover (3) which constitutes an end of a cylinder (1) and a cylinder tube (2) which constitutes the cylindrical portion of the cylinder (1) are welded together by a laser beam applied from the outside radially of the cylinder tube (2) toward the inside radially of the cylinder tube (2).

## Description

### Technical Field

The present invention relates to a cylinder, a cylinder device and a working vehicle. In particular, the present invention relates to a cylinder welded by use of a laser beam, a cylinder device, and a working vehicle including the cylinder device.

### Background Art

PTL 1 discloses a hydropneumatic cylinder in which a cylinder tube and a head cover of the cylinder are coupled by welding.

Among hydropneumatic cylinders, hydraulic cylinders that use oil pressure and the like, unlike pneumatic cylinders, has an internal operation fluid with a high pressure. Therefore, in order to obtain a certain fatigue strength, such hydraulic cylinders require to increase the depth of the melting part in welding of the cylinder tube and the head cover. Among arc welding methods, MAG welding (METAL ACTIVE GAS WELDING) that uses inert gas mixed with carbon dioxide as the shield gas is normally used. With the MAG welding, groove working is carried out at a joint portion between the cylinder tube and the head cover, and a filler is added to melt the metal to a deep portion, thereby obtaining a fatigue strength.

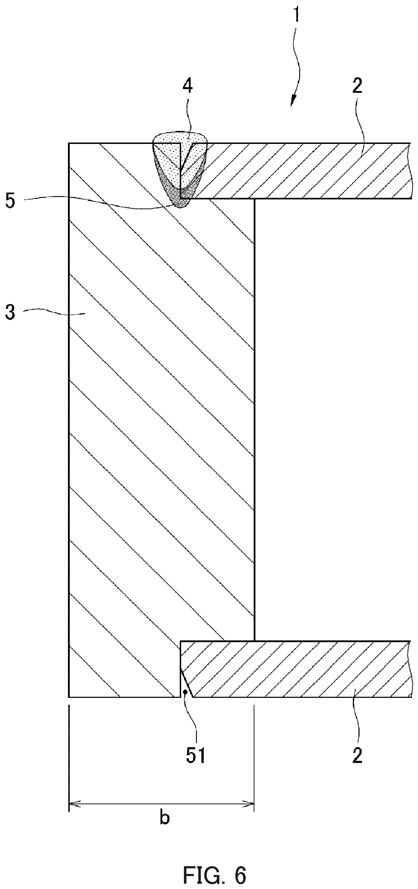

At the time of welding of cylinder tube 2 and head cover 3 (shown in FIG. 6) by the MAG welding, a groove for the filler is provided on cylinder tube 2 side, and welding of cylinder tube 2 and head cover 3 is carried out from the outer side toward the inner side of cylinder tube 2 such that melting portion 4 of the metal is narrowed, thereby ensuring a welding strength.

The shape of the inner periphery of the hydraulic cylinder is, however, required to be finished with a high precision in order to smoothly operate the piston housed in the cylinder. Here, it is necessary to increase the heat input of welding to increase the depth of the melting part for the purpose of ensuring the fatigue strength. On the other hand, the head cover and the like of the hydraulic cylinder ("b" of FIG. 6) are required to have a sufficient thickness to prevent thermal deformation due to the heat input. However, increasing the thickness for the head cover and the like of the hydraulic cylinder, the length and the total weight of the cylinder are disadvantageously increased.

In addition, disadvantageously, when the filler that is used in the MAG welding is added, impurities adhere on the outside of the melting part, and cracking could be caused from the portion where the impurities adhere.

### Citation List

### Patent Literature

PTL 1
Japanese Patent Application Laid-Open No. 2002-257238

### Summary of Invention

### Technical Problem

To solve the above-mentioned problems, an object of the present invention is to provide a cylinder in which the entire length and the weight are reduced while ensuring precision of the internal shape of the cylinder, and a cylinder device including the cylinder, and a working vehicle including the cylinder device.

### Solution to Problem

In a welded-type hydraulic cylinder according to the first aspect, a head cover that forms an end portion of the cylinder, and a cylinder tube that forms a cylindrical portion of the cylinder are welded with a laser beam that is applied toward an inside from an outside in a radial direction of the cylinder tube.

In the welded-type hydraulic cylinder of the second aspect, a portion melted by the laser beam reaches a portion deeper than a thickness of the cylinder tube in the first aspect.

In the welded-type hydraulic cylinder of the third aspect, the welding uses no filler in the first or second aspect.

In the welded-type hydraulic cylinder of the fourth aspect, the welding is a hybrid welding that is a combination of welding using the laser beam and an arc welding using a filler in the first or second aspect.

In the welded-type hydraulic cylinder of the fifth aspect, a rod cover of the cylinder is provided to the cylinder tube such that the rod cover is detachable from the cylinder tube in the first to fourth aspects.

The sixth aspect is a cylinder device including a piston, a piston rod, and the welded-type hydraulic cylinder according to the first to fifth aspects.

The seventh aspect is a working vehicle that includes the cylinder device according to sixth aspect in the extendable boom, in which an extension/contraction operation of the extendable boom is carried out with the cylinder device.

### Advantageous Effects of Invention

According to the first aspect, the head cover and the cylinder tube are welded with a laser beam that is applied toward the inside from the outside in the radial direction of the cylinder tube. Accordingly, the size of the melting portion is small, and the heat input for welding is small. With such a small heat input, the hydraulic cylinder including the head cover and the cylinder tube is not easily deformed, and the thickness of the head cover and the like, and the total weight of the cylinder can be reduced.

According to the second aspect, the melting portion of laser welding reaches a portion on the inner side relative to the inner periphery of the cylinder tube. Accordingly, the heat-affected portion of the end portion of the melting portion where welding defects are easily caused can be located on the head cover side. In this manner, the fatigue strength of the welding portion, and the lifetime of the cylinder can be increased.

According to the third aspect, no filler is used. Accordingly, deposition of impurities between the melting portion and the heat-affected portion can be prevented. Also in view of this, the fatigue strength of the welding portion can be increased, and the lifetime of the cylinder can be increased.

According to the fourth aspect, the welding is a hybrid welding combining welding using a laser beam and arc welding using a filler. Accordingly, the heat input from the arc-welding device to the cylinder, and the residual stress in the cylinder can be reduced in comparison with the case where welding is carried out with only the arc-welding device. In this manner, the welding strain of the cylinder can be reduced, and weight reduction and compactification of the welded-type hydraulic cylinder can be achieved. Also in the case where the heat input is reduced in the above-mentioned manner, welding using a laser beam is carried out, and therefore a large melting depth can be ensured.

According to the fifth aspect, the rod cover is disposed such that the rod cover is detachable from the cylinder tube. Accordingly, internal maintenance can be carried out by separating the cylinder and the piston. In this manner, the lifetime of the cylinder can be increased.

According to the sixth aspect, the welded-type hydraulic cylinder of the first to fifth aspects is used in the cylinder device. Accordingly, the length of the cylinder device in the axial direction, and the weight of the cylinder device can be reduced.

According to the seventh aspect, by using the cylinder device of the sixth aspect in a working vehicle including an extendable boom capable of carrying out operations of slewing and raising, and carrying out the extension/contraction operation of the extendable boom with the cylinder device. Accordingly, the weight of the operating portion can be reduced, and the hoisting load and the like of the leading end of the extendable boom can be increased by the reduced weight of the cylinder device.

### Brief Description of Drawings

FIG. 1 is a sectional view of an end portion of a cylinder according to an embodiment of the present invention;
FIG. 2 is a graph showing a result of a fatigue endurance test of the cylinder according to the embodiment of the present invention;
FIG. 3 illustrates a laser device for welding the cylinder according to the embodiment of the present invention;
FIG. 4 illustrates a laser device and an arc-welding device for welding a cylinder according to a second embodiment of the present invention;
FIG. 5 illustrates an entirety of a working vehicle using the cylinder of the embodiment of the present invention; and
FIG. 6 is a sectional view of an end portion of a cylinder of a conventional example.

### Description of Embodiments

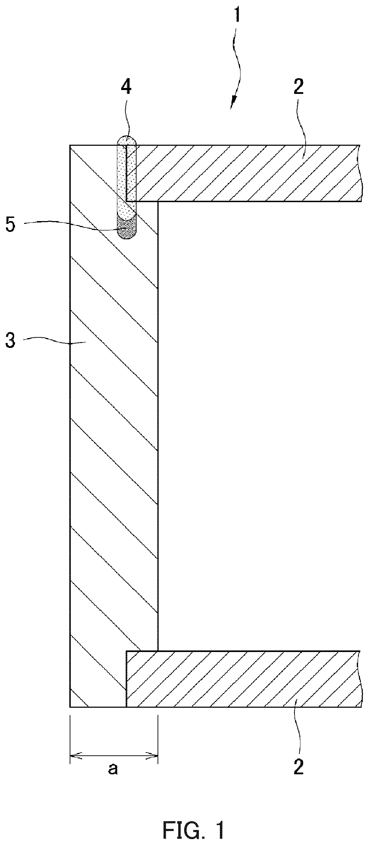

Cylinder 1 according to an embodiment of the present invention is described below with reference to the accompanying drawings. FIG. 1 is a sectional view illustrating an end portion of cylinder 1 according to the embodiment of the present invention taken along a plane including the axial center of cylinder tube 2.

Cylinder 1 according to the present embodiment is a cylinder that forms a cylinder device of a single-rod type using oil pressure, and is composed of cylinder tube 2, head cover 3, and a rod cover. Cylinder tube 2 has a cylindrical shape having a small thickness, and forms the cylindrical portion of cylinder 1. Head cover 3 forms an end portion provided with no piston rod hole in a cylinder of a single-rod type. Head cover 3 has a substantially flat columnar shape, and may be provided with a coupling pin hole and the like for attaching to other apparatus and the like. The rod cover forms the other end portion of cylinder 1. A hole for inserting a piston rod is provided at the center of the rod cover, and a packing for preventing outflow of hydraulic fluid from cylinder 1 is provided inside the rod cover.

In cylinder 1, cylinder tube 2 and head cover 3 are welded with a laser beam. The laser beam is applied from the outside toward the inside of the radial direction of cylinder tube 2. Preferably, the laser beam is applied toward the axial center of cylinder tube 2. The reason for this is that the depth of the melting portion of the metal with the application of the laser beam can be increased in the above-mentioned manner.

The inner periphery side of cylinder tube 2 and the outer periphery side of head cover 3 are processed with a predetermined tolerance, and are fit to each other before the welding. At this time, the welding groove is not provided at the end surface of cylinder tube 2 on head cover 3 side, and the end surface of the head cover 3 side that faces that end surface of cylinder tube 2. Thus the end surfaces of cylinder tube 2 and head cover 3 make contact with each other.

At the time of welding, cylinder tube 2 and head cover 3 are welded with a laser beam such that melting portion 4 of the metal resulting from the welding reaches a portion on the inside relative to the inner periphery of cylinder tube 2. No filler is used in this welding.

Head cover 3 and cylinder tube 2 are welded with a laser beam that is applied toward the inside from the outside of the radial direction of cylinder tube 2, and thus melting portion 4 of a laser beam is small, and the heat input for welding is small. Since the heat input is small, cylinder 1 is not easily deformed, and the thickness of head cover 3 and the like, and the total weight of cylinder 1 can be reduced.

Specifically, when a laser beam is used, a large energy can be applied to a small point since a focal point of a laser beam is small, and accordingly expansion of melting portion 4 is small, or in other words, the length of melting portion 4 in the axis direction of cylinder 1 is small. As a result, the thickness of head cover 3 can be reduced while reducing the internal deformation of cylinder 1. In addition, the entire heat input can be reduced and the possibility of heat deformation of cylinder 1 is low. Also in view of this, the thickness of head cover 3 ("a" in FIG. 1) can be reduced. With the reduced thickness of head cover 3, the total weight of cylinder 1 can be reduced.

Welding is carried out such that melting portion 4 resulting from laser welding reaches a portion deeper than the inner periphery of cylinder tube 2, that is, a portion on the depth side relative to the thickness of cylinder tube 2. In general, when welding is carried out, heat-affected portion 5 that has different structural and mechanical properties under the influence of the heat is formed at a portion around the melted metal. Welding defects are easily caused at heat-affected portion 5, and heat-affected portion 5 become a starting point of cracking when a load is repeatedly exerted thereon, thus reducing the strength. In the case where a laser beam is used, heat-affected portion 5 is formed mainly at the leading end side of melting portion 4, and heat-affected portion 5 can be formed on head cover 3 side. Accordingly, the fatigue strength of welding portion 4, and the lifetime of the cylinder can be increased.

No filler is used in the laser welding of the cylinder of the present embodiment 1. The reason for this is that head cover 3 and cylinder tube 2 as the base material can be directly melted and joined to each other by use of a laser beam. Since no filler is used, deposition of impurities used in the filler at a portion between melting portion 4 and heat-affected portion 5 can be prevented. Since no such impurities, which can cause cracking as the starting point, are included, the fatigue strength of the welding portion can be increased and the lifetime of cylinder 1 can be increased.

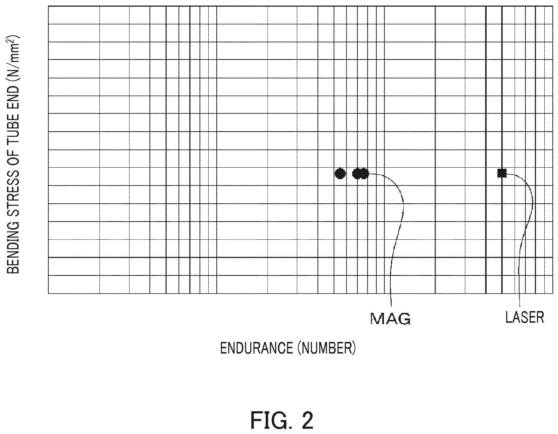

FIG. 2 shows a result of an fatigue endurance test of cylinder 1 according to the embodiment of the present invention. A cylinder device was composed with cylinder 1. A load was repeatedly exerted on head cover 3 of cylinder 1 in the direction perpendicular to the axial center of cylinder 1. The number of times of the repetition at the time when cracking is caused between cylinder tube 2 and head cover 3 was compared with that of cylinder 1 manufactured by a conventional welding method. The value of the repeated load was calculated based on the maximum pressure that is generated in the cylinder in rated loads. In the graph, the ordinate indicates the repeated load exerted on head cover 3, and the abscissa indicates the number of times of the repetition at the time when cracking was caused. The lifetime of the cylinder on which laser welding was carried out (square) is ten times longer than that of the cylinder on which conventional MAG welding was carried out (circle).

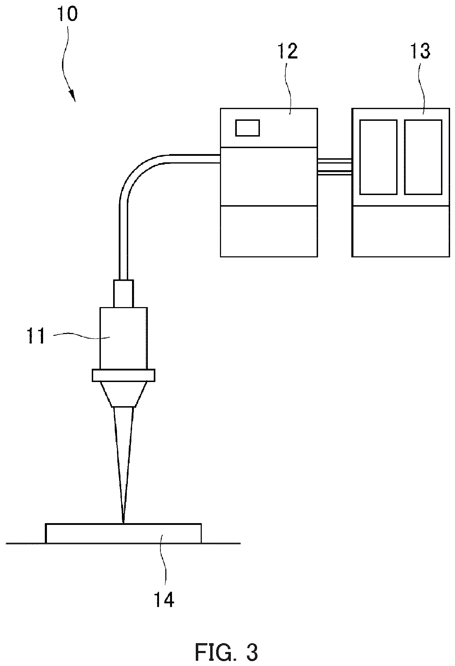

FIG. 3 illustrates a configuration of laser device 10 for welding cylinder 1 according to the present embodiment. From laser torch 11, laser device 10 applies a laser beam of laser oscillator 12 to target 14. Laser device 10 has an output required for welding, and in general includes cooling device 13 for cooling laser oscillator 12. In the present embodiment, a fiber laser using, as the medium of the laser, a fiber added with a rare-earth element and whose gain is wide-banded is used. With a fiber laser, cooling device 13 is downsized. It should be noted that the medium of the laser is not limited. A carbon dioxide laser as a gas laser, and a YAG laser used as a solid-state laser may also be used.

While one end of cylinder 1 according to the present embodiment is welded by laser welding, the rod cover is provided at the other end of cylinder 1 such that the rod cover is detachable from cylinder tube 2. To be more specific, the rod cover is fixed to cylinder tube 2 by a bolt, a tie rod, or screwing, thereby forming a cylinder.

With the rod cover detachable from cylinder tube 2, cleaning of adhering materials from the hydraulic fluid, maintenance work for replacing the packing and the like can be carried out by separating cylinder 1 and the piston. In this manner, the lifetime of cylinder 1 can be increased.

A piston and a piston rod are provided in cylinder 1 according to the present invention, and thus a cylinder device is formed. With the cylinder device, a linear motion of the piston rod can be obtained by linearly operating the piston in the axis direction of cylinder 1.

By use of the cylinder according to the present invention in a cylinder device, the length of the cylinder device in the axial direction can be reduced, and the weight of the cylinder device can be reduced.

The cylinder device is connected to a hydraulic device through a valve or the like at a port provided outside of cylinder 1, and, when the valve or the like is operated, the operation fluid is introduced into the cylinder device to linearly operate the piston rod. Normally, the hydraulic fluid is operation oil, but water can also be used depending on the use.

In the cylinder of the present embodiment, cylinder tube 2 and head cover 3 are welded by applying a laser beam from the outside toward the inside in the radial direction of cylinder tube 2 such that the optical axis of the laser light falls within a plane perpendicular to the axial center of cylinder tube 2. The reason for this configuration is that the contact surface between cylinder tube 2 and head cover 3 is perpendicular to the axial center of cylinder tube 2, and the present invention is not limited to this configuration. That is, it suffices that the optical axis of the laser light is located in the plane including the contact surface between cylinder tube 2 and head cover 3.

While cylinder 1 of the cylinder device of a single-rod type is described above, the cylinder device may be of a double-rod type. In the case where the cylinder device is of the double-rod type, either of the rod covers of the both ends is welded to cylinder tube 2.

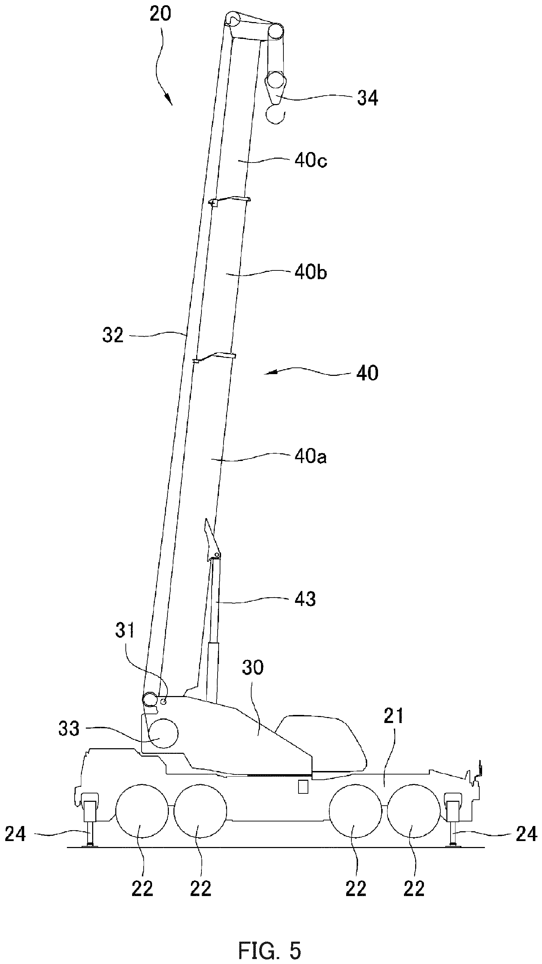

FIG. 5 illustrates a structure of a mobile crane as working vehicle 20 including the cylinder device according to the present embodiment. In the mobile crane as working vehicle 20, a plurality of wheels 22 and a prime mover for travelling are provided in a publicly known traveling body 21, and outrigger 24 for ensuring the stability during a crane operation is provided. Slewing base 30 is mounted on the top surface of traveling body 21, and slewing base 30 can be turned 360 degrees in the horizontal plane by a turning motor.

Extendable boom 40 is mounted on slewing base 30 such that extendable boom 40 can be raised and lowered. Extendable boom 40 includes main boom 40a on the base end side, and a plurality of sub booms, 40b and 40c, that are fit in main boom 40a in a telescope manner. While two sub booms, 40b and 40c, are disclosed in the example illustrated in the drawing, the number of the sub boom may be zero, one, three or greater. The extension/contraction operation of sub booms 40b and 40c is carried out by an extendable cylinder provided in extendable boom 40.

The base end of main boom 40a is pivotally supported at slewing base 30 with pin 31, and raising cylinder 43 is mounted between main boom 40a and slewing base 30. Extendable boom 40 is raised when raising cylinder 43 is extended, and extendable boom 40 is lowered when raising cylinder 43 is contracted.

Wire rope 32 provided with hook 34 is suspended from the boom head formed at the leading end of extendable boom 40, that is, at the leading end of sub boom 40b. Wire rope 32 is guided to the base of extendable boom 40 along extendable boom 40 and wound by winch 33. Winch 33 is provided with a hoist motor not illustrated, and hook 34 can be vertically moved by rotating winch 33 with driving of the hoist motor to wind out and wind up wire rope 32. With this configuration, combination of the extension, contraction, raising, and lowering of extendable boom 40 with the vertical movement of hook 34 allows for lifting and lowering of materials in a three-dimensional space.

By carrying out the extension/contraction operation of extendable boom 40 by use of the cylinder device of the embodiment of the present invention in extendable boom 40 of working vehicle 20 that includes extendable boom 40 capable of carrying out moving operations of a horizontal rotation and a vertical rotation, the weight of the sub booms and the like of the leading end side of extendable boom 40 can be reduced. Thus, the hoisting load of the leading end of extendable boom 40 and the like can be increased in accordance with the reduced weight of the cylinder device.

While the welded-type hydraulic cylinder according to the embodiment of the present invention is a welded-type hydraulic cylinder which is welded only by a laser beam without using a filler, the present invention is not limited to this. For example, the welded-type hydraulic cylinder may be manufactured by hybrid welding combining laser welding and arc welding using a filler. A welded-type hydraulic cylinder manufactured by such hybrid welding is described below as a second embodiment.

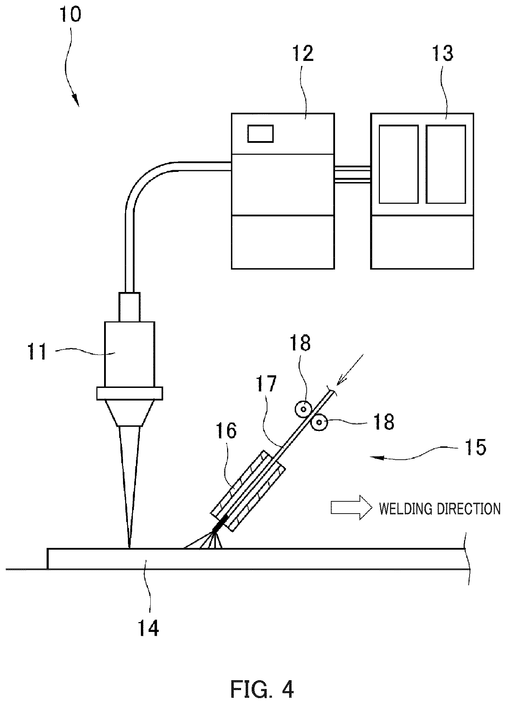

As illustrated in FIG. 4, cylinder 1 according to the second embodiment is manufactured by a hybrid welding using laser device 10 and arc-welding device 15. Arc-welding device 15 is a publicly known welding machine that sends electrode wire 17 into nozzle 16 by supply roller 18, and emits shield gas from nozzle 16. Examples of the arc welding include gas-shielded welding methods of a consumable electrode type including the MAG welding mentioned in Background Art, non-gas shielded arc welding methods, TIG welding methods, and the like.

Here, the hybrid welding is a welding method in which arc-welding device 15 and laser device 10 for welding are disposed in the welding direction, and energies are simultaneously supplied to one melting part from the two devices. In the present embodiment, arc-welding device 15 is disposed in front of laser device 10 in the welding direction. It is to be noted that the order of the devices is not reversed.

By manufacturing the welded-type hydraulic cylinder by a hybrid welding combining the laser beam welding and the arc welding using a filler, the heat input from arc-welding device 15 into cylinder 1 can be reduced, and the residual stress in cylinder 1 can be reduced in comparison with the case where welding is carried out with only arc-welding device 15. Thus, the welding strain of cylinder 1 can be reduced, and weight reduction and compactification of the welded-type hydraulic cylinder can be achieved.

Also in the case where the heat input is suppressed in the above-mentioned manner, welding using a laser beam is carried out, and therefore a large melting depth can be ensured. In particular, since arc-welding device 15 is provided in front of laser device 10, it is possible to weld a portion around the surface of a welding object with a small heat input by arc-welding device 15, and thereafter, put the melting member to a deep part of the welding object by laser device 10.

In addition, in the case where a welded-type hydraulic cylinder having a large diameter is welded using only laser device 10, the melting portion melted by laser device 10 is small in comparison with the sheet thickness of cylinder tube 2, and consequently a pear-shaped crack is easily formed at the melting portion. By combining arc-welding device 15 with laser device 10, the formation of such a pear-shaped crack can be reduced. In addition, while the working precision at the joint surface between cylinder tube 2 and head cover 3 is required to be increased in the case of the welding using only laser device 10, the joint surface can be filled with a filler by arc-welding device 15, and accordingly it is not necessary to increase the working precision of the joint surface more than necessary, thus making it possible to reduce the processing cost.

### Industrial Applicability

The cylinder and the cylinder device according to the embodiments of the present invention can be applied in place of conventional cylinders and conventional cylinder devices in devices that have been using conventional cylinders and conventional cylinder devices. In particular, in the case where the cylinder and the cylinder device are components that are operated on the device, the weight of the components can be reduced.

### Reference Signs List

1 Cylinder
2 Cylinder tube
3 Head cover
4 Melting portion
5 Heat-affected portion
20 Working vehicle
40 Extendable boom

## Claims

1. A welded-type hydraulic cylinder that forms a cylinder device that uses hydraulic fluid, wherein:
a head cover that forms an end portion of the cylinder, and a cylinder tube that forms a cylindrical portion of the cylinder are welded with a laser beam that is applied toward an inside from an outside in a radial direction of the cylinder tube.

2. The welded-type hydraulic cylinder according to claim 1, wherein a portion melted by the laser beam reaches a portion deeper than a thickness of the cylinder tube.

3. The welded-type hydraulic cylinder according to claim 1 or 2, wherein the welding uses no filler.

4. The welded-type hydraulic cylinder according to claim 1 or 2, wherein the welding is hybrid welding that is a combination of welding using the laser beam and arc welding using a filler.

5. The welded-type hydraulic cylinder according to any one of claims 1 to 4, wherein:
the cylinder includes a rod cover at an end portion which is opposite to the end portion where the head cover is provided; and
the rod cover is provided to the cylinder such that the rod cover is detachable from the cylinder tube.

6. A cylinder device wherein a piston and a piston rod are mounted in the welded-type hydraulic cylinder according to claims 1 to 5.

7. A working vehicle that includes an extendable boom that is extendable, the working vehicle comprising:
the cylinder device according to claim 6 in the extendable boom, wherein an extension/contraction operation of the extendable boom is carried out with the cylinder device.
